Europäisches Patentamt

European Patent Office

Office européen des brevets

(11) Veröffentlichungsnummer: **0 334 345**
**A2**

# (12) EUROPÄISCHE PATENTANMELDUNG

(21) Anmeldenummer: 89105212.8

(22) Anmeldetag: 23.03.89

(51) Int. Cl.⁴: **B24B 19/12 , B24B 49/00**

(30) Priorität: 25.03.88 DE 3810049

(43) Veröffentlichungstag der Anmeldung:
27.09.89 Patentblatt 89/39

(84) Benannte Vertragsstaaten:
**CH DE FR GB IT LI SE**

(71) Anmelder: **Fortuna-Werke Maschinenfabrik GmbH**
**Pragstrasse 140**
**D-7000 Stuttgart 50(DE)**

(72) Erfinder: **Wedeniwski, Horst Josef**
**Beutelsbachstrasse 8/1**
**D-7064 Remshalden-Grunbach(DE)**

(74) Vertreter: **Witte, Alexander, Dr.-Ing. et al**
**Witte, Weller & Hilgenfeldt Patent- und**
**Rechtsanwälte Augustenstrasse 7**
**D-7000 Stuttgart 1(DE)**

(54) **Verfahren zum Schleifen von Nocken einer Nockenwelle.**

(57) Ein Verfahren dient zum Schleifen von Nocken (10) einer drehbar eingespannten Nockenwelle mittels einer numerisch gesteuerten Schleifmaschine. Die Nockenwelle ist mittels eines steuerbaren ersten Antriebes (20) in definierten Winkelschritten und mit vorgegebener Winkelgeschwindigkeit um ihre Längsachse (12) drehbar. Eine Schleifscheibe (11) ist mit einer zur Längsachse (12) parallelen Mantellinie mittels eines steuerbaren Seitenantriebes (21) in definierten Schritten längs einer zur Längsachse (12) rechtwinkelig verlaufenden Achse (X) zustellbar. Eine zu erzeugende Soll-Kontur der Nocken (10) wird punktweise in Form einer Tabelle vorgegeben, die Soll-Koordinaten der Punkte enthält, deren Werte unmittelbar als Steuergrößen für die Antriebe (20, 21) dienen können. Die Werte der Koordinaten sind in Abhängigkeit von Prozeßparametern der Schleifmaschine modifizierbar.

Um zu vermeiden, daß zum Modifizieren der Koordinaten zunächst Musternocken geschliffen und vermessen werden müssen, werden die Koordinaten bereits beim Einstellen der Schleifmaschine in Abhängigkeit von den Prozeßparametern nach vorgegebenen Gleichungen modifiziert, indem ein Korrekturwert des Erhebungswertes des Nockens in Abhängigkeit von der Bahngeschwindigkeit des zu schleifenden Punktes des Nockens, der Geschwindigkeitsverstärkung eines Reglers des Steuergerätes, der bewegten Lastmassen sowie der Steifigkeit des Gesamtsystems und der zweiten Ableitung des Erhebungswertes nach dem Erhebungswinkel bestimmt wird. Mit diesen gezielt modifizierten Koordinaten wird der Nocken dann nach einer definiert "falschen" Nockenkontur geschliffen, die unter Berücksichtigung der systematischen Fehler in der Realität zu einer idealen Nockenkontur führt.

Fig.2

## Verfahren zum Schleifen von Nocken einer Nockenwelle

Die Erfindung betrifft ein Verfahren zum Schleifen von Nocken einer drehbar eingespannten Nockenwelle mittels einer numerisch gesteuerten Schleifmaschine, bei dem die Nockenwelle mittels eines steuerbaren ersten Antriebes in definierten Winkelschritten und mit vorgegebener Winkelgeschwindigkeit um ihre Längsachse drehbar und eine Schleifscheibe mit einer zur Längsachse parallelen Mantellinie mittels eines steuerbaren zweiten Antriebes in definierten Schritten längs einer zur Längsachse rechtwinkelig verlaufenden Achse zustellbar ist, wobei eine zu erzeugende Soll-Kontur der Nocken punktweise in Form einer Tabelle vorgegeben wird, die Soll-Koordinaten der Punkte enthält, deren Werte unmittelbar als Steuergrößen für die Antriebe dienen können un die Werte der Koordinaten in Abhängigkeit von Prozeßparametern der Schleifmaschine modifizierbar sind.

Ein Verfahren der vorstehend genannten Art ist aus der DE-Z "Werkstatt und Betrieb" 119 (1986), Heft 8, Seiten 655 bis 660, bekannt.

Bei dem bekannten Verfahren werden aus einer Fertigungszeichnung mit den geometrisch Abmessungen der Nockenwelle, der Nockenart, der Winkelanordnung, der Winkellage zum Referenznocken und der Erhebungs-Tabelle die sogenannten Eingabeparameter ermittelt. Hierunter versteht man den Erhebungswert bezogen auf einen Erhebungswinkel, d.h. eine polarkoordinaten-ähnliche Darstellung der Außenkontur des Nockens. Diese Daten werden entweder manuell oder über eine alphanumerische Tastatur oder über externe Speichermedien, beispielsweise einen Lochstreifen oder eine Diskette, eingegeben.

Bei dem bekannten Verfahren werden aus der vorliegenden Geometrie der Nockenkontur Ableitungen erster und höherer Ordnungen des Erhebungswertes über dem Erhebungswinkel ermittelt und grafisch aufgetragen. Auf diese Weise ist eine grafische Überprüfung der Eingabedaten möglich. Auch lassen sich minimale und maximale Werte der Relativbeschleunigung im Wege dieser Nockenformanalyse bestimmen. z

Das auf diese Weise erstellte Schleifprogramm wird nun auf einen Musternocken angewendet, um die gewünschte Nockenkontur zu schleifen. Nach dem Schleifen wird der Musternocken einer Nockenform-Meßmaschine zugeführt, und es werden die Abweichungen von der gewünschten Nockenform festgestellt. Mit Hilfe einer Soll-Ist-Korrektur werden nun die gespeicherten Meßergebnisse ggf. korrigiert, damit der real geschliffene Nocken den gewünschten Vorgaben entspricht.

Das bekannte Verfahren hat damit den Nachteil, daß die erforderlichen Korrekturen des Schleifprogramms erst durch praktische Erprobung festgestellt werden müssen, wobei in der Praxis mindestens ein Korrekturvorgang erforderlich ist, ggf. sogar mehrere, wenn die nach dem ersten geschliffenen Musternocken vorgenommenen Korrekturen noch nicht ausreichen, um die gewünschte Idealkontur zu erzeugen.

Der Erfindung liegt daher die Aufgabe zugrunde, ein Verfahren der eingangs genannten Art dahingehend weiterzubilden, daß ein Erprobungsschritt durch Schleifen und Ausmessen eines Musternockens mit nachfolgender Korrektur der Datensätze nicht erforderlich ist.

Diese Aufgabe wird erfindungsgemäß durch die folgenden Verfahrensschritte gelöst:
- Bestimmen des Erhebungswertes von Punkten der Soll-Kontur in Abhängigkeit vom Erhebungswinkel;
- Bilden der ersten und der zweiten Ableitung des Erhebungswertes nach dem Erhebungswinkel;
- Bestimmen der Bahngeschwindigkeit der Punkte;
- Bestimmen eines Korrekturwertes des Erhebungswertes der Punkte nach der Beziehung:

$$\Delta S_N(\Theta_1) = K_v \frac{V_B(\Theta_1)}{A} + K_m \frac{m_L}{B} \frac{d^2 S_N}{d\Theta_1{}^2}$$

wobei $K_v$ und $K_m$ Prozeßkonstanten, $V_B(\Theta_i)$ die Bahngeschwindigkeit, A die Geschwindigkeitsverstärkung eines Reglers des Steuergerätes und $m_L$ die Lastmassen sowie B die Steifigkeit in dem jeweiligen Punkt sind:
- Umwandeln des Korrekturwertes des Erhebungswertes in Koordinaten-Korrekturwerte;
- Modifizieren der Soll-Kontur in modifizierte Koordinaten nach den Beziehungen:

$X_{soll\,m}(\Theta_i) = X_{soll}(\Theta_i) \pm \Delta X(\Theta_i)$

$C_{soll\,m}(\Theta_i) = C_{soll}(\Theta_i) \pm \Delta C(\Theta_i)$

- Schleifen der Nocken unter Einstellung der Antriebe nach den modifizierten Koordinaten.

Die der Erfindung zugrundeliegende Aufgabe wird auf diese Weise vollkommen gelöst. Es werden nämlich bereits beim Erstellen der Koordinaten-Tabellen für die Punkte des Kurvenzuges, der die gewünschte Nockenkontur darstellt, sämtliche Prozeßparameter berücksichtigt, die sich bei derartigen Schleifprozessen als Fehler auswirken. So wird insbesondere die Regelcharakteristik des verwendeten Reglers berücksichtigt, ebenso wie die beim Schleifvorgang bewegten Massen und die Steifigkeit des Systems im jeweiligen Angriffspunkt der Schleifscheibe am Nocken.

Wenn die vorstehend erläuterte Modifikation aller Koordinaten der interessierenden Punkte durchgeführt ist, enthält der Koordinatenspeicher der Schleifmaschine ein Nockenprofil, das in einer solchen Weise vom gewünschten Idealprofil des Nockens abweicht, daß sich letztendlich unter Berücksichtigung der in der Praxis auftretenden Fehler, insbesondere infolge der Dynamik des bewegten Schleifsystems, doch die ideale Nockenkontur einstellt.

Weitere Vorteile der Erfindung ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1 eine schematisierte Seitenansicht eines Nockens einer Nockenwelle, an der eine Schleifscheibe in einem Punkte angreift;

Fig. 2 einen vergrößerten Ausschnitt aus der Darstellung der Fig. 1 zur Erläuterung einer erfindungsgemäßen Modifizierung einer als Punktfolge vorgegebenen Soll-Kontur.

Fig. 3 eine äußerst schematisierte Darstellung einer Schleifmaschine mit den zugehörigen wesentlichen Steuerkomponenten;

Fig. 4 bis 6 grafische Darstellungen des Erhebungswertes eines Nockens sowie deren erster und zweiter Ableitung nach dem Erhebungswinkel;

Fig. 7 ein Flußdiagramm zur Erläuterung des erfindungsgemäßen Verfahrens;

Fig. 8 ein Blockschaltbild eines Regelkreises zur weiteren Erläuterung des erfindungsgemäßen Verfahrens;

Fig. 9 ein Diagramm, darstellend einen Dämpfungsgrad in Abhängigkeit von einer Geschwindigkeitsverstärkung bei einem Schleifverfahren.

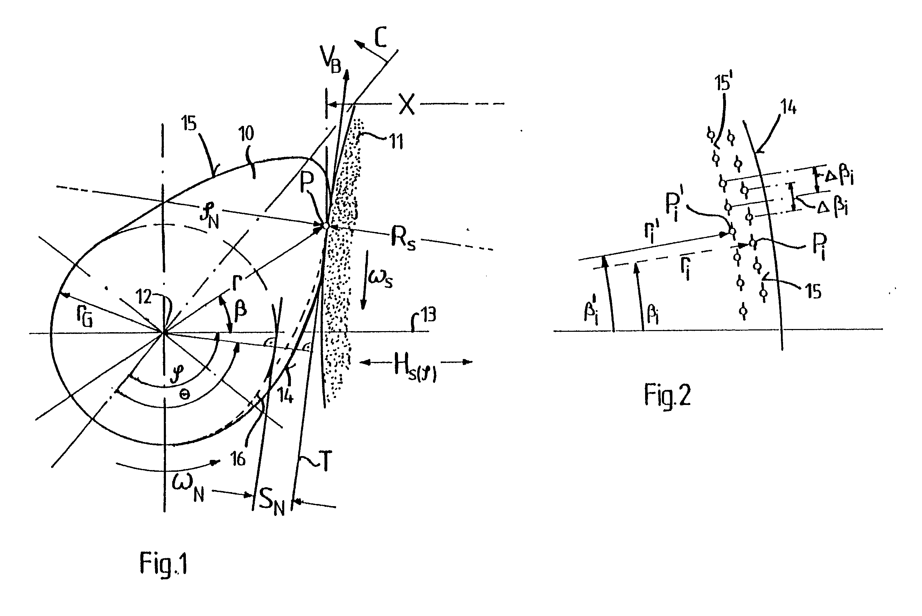

In Fig. 1 bezeichnet 10 einen Nocken einer im übrigen nicht dargestellten Nockenwelle. Der Nocken 10 soll mittels einer Schleifscheibe 11 bearbeitet werden. Hierzu ist der Nocken 10 mit der Nockenwelle um seine Längsachse, die sogenannte C-Achse 12, drehbar. Die Schleifscheibe 11 ist hingegen entlang einer zur C-Achse 12 unter 90° ausgerichteten zweiten Achse, der sogenannten X-Achse 13, in vorgegebenen Schritten verfahrbar.

Mit 14 ist eine Roh-Oberfläche des Nockens 10 und mit 15 die gewünschte Fertig-Oberfläche bezeichnet, wobei sich die Differenz als Aufmaß 16 darstellt. Aus Gründen der Vereinfachung soll im nachfolgenden nur ein einziger Bearbeitungsvorgang beschrieben werden, der von der Roh-Oberfläche 14 zur Fertig-Oberfläche 15 unter Abtragung des Aufmaßes 16 führt, es versteht sich jedoch, daß für mehrschrittige Bearbeitungsverfahren Entsprechendes gilt.

Die Kontur des Nockens 10 wird üblicherweise in Polarkoordinaten dargestellt, mit einem Winkel und einem Radius r, um einen bestimmten Punkt P der Kontur des Nockens 10 zu definieren. Aus den Polarkoordinaten ergeben sich die technisch, d.h. hinsichtlich der späteren Funktion des Nockens wichtigen Kennwerte, nämlich zum einen der Radius $R_G$ des Grundkreises und zum anderen der sogenannte Erhebungswert $S_N$. Dieser Erhebungswert $S_N$ ergibt sich aus dem Abstand einer Tangente T an dem Punkt P zu einer dazu parallelen Tangente an den Grundkreis. Das Lot vom Mittelpunkt des Grundkreises auf die Tangente T definiert den sogenannten Erhebungswinkel $\Theta$. Die Wertepaare $S_N$, $\Theta$, bilden die sogenannte Erhebungstabelle.

Um die gewünschte Kontur des Nockens mit der Fertig-Oberfläche 15 zu erzeugen, ist der Nocken 10, wie bereits erwähnt, um die C-Achse 12 drehbar. Hierzu werden Steuersignale für einen entsprechenden Drehantrieb erzeugt, und zwar ein bestimmter Drehwinkel $\phi$ in Abhängigkeit von der Zeit, wobei der Nocken 10 mit einer vorgegebenen Winkelgeschwindigkeit $\omega_N$ umläuft. $\omega_N$ kann dabei abhängig oder unabhängig von $\phi$ eingestellt werden. Der Winkel, den der Radius r mit der X-Achse 13 einschließt, ist in Fig. 1 mit $\beta$ bezeichnet.

Die Schleifscheibe 11 wird ebenfalls mittels eines geeigneten Antriebes in der bereits erwähnten Weise entlang der X-Achse 13 verfahren, und zwar mit einem Vorschub $H_s$, der in Abhängigkeit vom Drehwinkel $\phi$ des Nockens 10 eingestellt wird. Die Schleifscheibe 11 läuft dabei mit einer Winkelgeschwindigkeit $\omega_S$ um.

Bei Kenntnis des Schleifscheibenradius $R_S$ kann man nun den axialen Vorschub $H_s$ bzw. einen entsprechenden X-Wert in Abhängigkeit vom Drehwinkel $\phi$ des Nockens 10 so einstellen, daß die Schleifscheibe 11 gerade im gewünschten Punkt P des Nockens 10 die Fertig-Oberfläche 15 erzeugt. Der Punkt P steht in der Darstellung der Fig. 1 repräsentativ für eine Mantellinie der Schleifscheibe 11, weil diese eine umlaufende zylindrische Schleiffläche aufweist und üblicherweise die gesamte Breite des Nockens 10 in einem Durchgang schleift.

Durch die vorstehend erläuterten Koordinaten ist auch der Krümmungsradius $\rho_N$ der Soll-Kontur des Nockens 10 im Punkte P definiert, und bei vorgegebener Winkelgeschwindigkeit $\omega_N$ des Nockens 10 ergibt sich auch eine Bahngeschwindigkeit $V_B$ im Punkte P, wobei der Vektor der Bahngeschwindigkeit $V_B$ in der Verlängerung der Tangente T im Punkte P an die Kontur des Nockens 10 liegt.

In der Praxis wird bei Schleifmaschinen für jeden Punkt P ein Wert X für die Einstellung der Schleifscheibe 11 entlang der X-Achse 13 und ein Wert C für die Einstellung des Winkels in der C-Achse 12 des Nockens 10 vorgegeben. Diese Wertepaare X, C lassen sich über die bekannten geometrischen Abhängigkeiten aus Wertepaaren $\Theta$, $S_N$ ermitteln, die vom Konstrukteur des Nockens in der Werkstattzeichnung vorgegeben werden. Beide Darstellungsarten sind äquivalent und lassen sich durch geeignete Transformationsgleichungen in einfacher Weise ineinander überführen.

Wird nun ein Nocken 10 mit Wertepaaren C, X geschliffen, die gerade einer Kette von Punkten P entlang der gewünschten Idealkontur des Nockens 10 entsprechen, so entsteht in der Realität eine Nockenkontur, die von der Idealkontur abweicht. Der wesentliche Grund für diese systematischen Fehler liegt in der Dynamik des Schleifsystems. Hierzu zählen zum einen die Charakteristiken der verwendeten Steuer- und Regeleinheiten, vor allem sind aber die dynamischen Eigenschaften der Nockenwelle sowie des Schleifschlittens zu berücksichtigen. Bei großen Bearbeitungsgeschwindigkeiten und damit auch großen Winkelgeschwindigkeiten $\omega_N$ und $\omega_S$ ergeben sich dynamische Fehler, weil zum einen die Lastmassen, insbesondere die Masse des Schleifschlittens, in der X-Achse bewegt werden müssen, zum anderen ist aber auch sowohl die Schleifmaschine wie auch die Nockenwelle selbst mit einer gewissen Nachgiebigkeit versehen, so daß der Nocken 10 beim Eingreifen der Schleifscheibe 11 entgegen der Richtung der Krafteinwirkung auszuweichen versucht. Zwar läßt sich die Elastizität der Nockenwelle dadurch reduzieren, daß man die Nockenwelle in ihrer halben Länge in einem Setzstock lagert, dies reduziert jedoch nur die Elastizität der Nockenwelle, ohne sie ganz auf Null zu vermindern.

Die Soll-Kontur 15 des Nockens 10 ist, wie erwähnt, durch die sogenannte Erhebungstabelle $S_N$, $\Theta$ definiert. Die Erhebungstabelle definiert in der Darstellung der Fig. 2 eine Reihe von Stützpunkten $P_i$, die im vorgegebenen Abstand $\Delta\beta$ voneinander angeordnet sind und auf diese Weise das Idealprofil der Fertig-Oberfläche 15 beschreiben. Der Abstand $\Delta\beta$ der Stützpunkte $P_i$ wird unter Berücksichtigung der zweiten Ableitung $d^2 S_N / d\Theta^2$ ermittelt. Betrachtet man in Fig. 2 die Polarkoordinaten $r_i$ und $\beta_i$ der Punkte $P_i$ der Fertig-Oberfläche 15, so kann man durch eine nachstehend beschriebene Soll-Wert-Modifikation die Punkte $P_i$ in modifizierte Punkte $P'_i$ mit den Koordinaten $r'_i$ und $\beta'_i$ überführen. Bei der Nockenbearbeitung wird dann das durch die modifizierten Punkte $P'_i$ definierte Realprofil einer Fertig-Oberfläche $15'$ geschliffen. Dessen Abweichung von dem Idealprofil der Fertig-Oberfläche 15 mit den Werten $r'_i - r_i$ und $\beta'_i - \beta_i$ wird so berechnet, daß die Formfehler des Prozesses durch Bahnbetrieb, wie z.B. Schleppfehler, Massenträgheit, Systemnachgiebigkeit u. dgl., analytisch kompensiert werden.

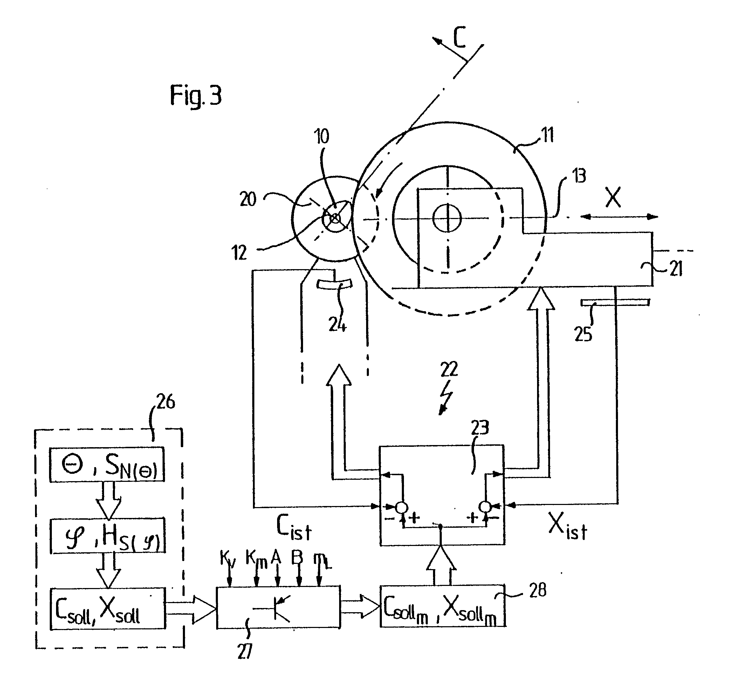

Die vorliegende Erfindung schafft in dieser Hinsicht Abhilfe, wie nachstehend anhand der Fig. 3 bis 7 erläutert werden soll:

Fig. 3 zeigt eine äußerst schematisierte Schleifmaschine mit einer ersten Antriebseinheit 20 für die C-Achse. Die erste Antriebseinheit 20 umfaßt ein Spannfutter für die Nockenwelle sowie einen elektromotorischen Antrieb, beispielsweise einen Schrittmotor, der es gestattet, die Nockenwelle in definierten Winkelschritten und mit definierter konstanter oder variabler Winkelgeschwindigkeit $\omega_N$ zu drehen. Eine zweite Antriebseinheit 21 für die X-Achse wird im wesentlichen durch den Schleifschlitten der Schleifmaschine dargestellt. Ein insgesamt mit 22 bezeichnetes NC-Steuergerät umfaßt hierzu einen Regler 23.

Der Regler 23 ist eingangsseitig an ein erstes Meßsystem (Drehgeber) 24 der C-Achse und ein zweites Meßsystem (Linearmaßstab) 25 der X-Achse angeschlossen. Die Meßsystem 24 und 25 liefern Ist-Werte $C_{ist}$ und $X_{ist}$, die die jeweilige Augenblicksposition der Drehlage der Nockenwelle bzw. der axialen Lage der Schleifscheibe 11 wiedergeben. Die Ist-Werte $C_{ist}$ und $X_{ist}$ werden im Regler 23 mit Soll-Werten verglichen, und die sich ergebende Wertedifferenz wird Steuereingängen der Antriebseinheiten 20 und 21 zugeführt, wie dies an sich bekannt ist.

Zur Erzeugung der Soll-Werte geht man folgendermaßen vor:

In einem Nockenkonturspeicher 26 werden Soll-Werte $C_{soll}$ und $X_{soll}$ gespeichert, die das gewünschte Idealprofil des Nockens 10 repräsentieren. Es wurde bereits erwähnt, daß die Wertepaare C, X aus Wertepaaren $\Theta$, $S_N$ ermittelt werden und der Bewegungsfunktion des Bahnbetriebes $(\phi, H_{s(\phi)})$ entsprechen.

Die unbearbeiteten Soll-Werte $C_{soll}$ und $_{soll}$ werden alsdann einer Modifizierstufe 27 zugeführt. Die Modifizierstufe 27 enthält weitere Speicher, in denen eine Vielzahl von Prozeßparametern abgelegt werden

4

kann. Hierzu zählen Konstanten $K_v$ und $K_m$, die sich beispielsweise aus Daten der Schleifmaschine oder aus der Geometrie der Nockenwelle oder aus dem verwendeten Werkstoff der Nockenwelle usw. ergeben. Ein Wert A repräsentiert die Geschwindigkeitsverstärkung des Reglers 23, die z.B. zwischen 4 und 7m/min mm liegen kann. B gibt die Steifigkeit des Gesamtsystems im jeweiligen Punkt P wieder, d.h. im wesentlichen die Nachgiebigkeit der Nockenwelle und die Elastizität des Schleifschlittens. Mit $m_L$ ist schließlich die gesamte Lastmasse als reduziertes Massenträgheitsmoment bezeichnet, d.h. die gesamte Masse, die beim Schleifen bewegt wird.

In der Modifizierstufe 27 werden unter Berücksichtigung dieser oder weiterer Prozeßparameter Korrekturwerte gebildet, die den unmodifizierten Soll-Werten $C_{soll}$ und $X_{soll}$ hinzugefügt werden, wie dies weiter unten anhand der Fig. 3 bis 6 noch erläutert werden wird. Auf diese Weise entstehen modifizierte Soll-Werte $C_{soll\ m}$ und $X_{soll\ m}$, die als Eingangsgrößen für den Regler 23 dienen.

Die Modifikation der Eingangs-Soll-Werte $C_{soll}$ und $X_{soll}$ zu modifizierten Soll-Werten $C_{soll\ m}$ und $X_{soll\ m}$ geschieht in der Weise, daß der Nocken 10 mit einem definiert "falschen" Profil geschliffen wird, dessen Abweichung vom Idealprofil gerade so gewählt ist, daß die sich in der Praxis einstellenden systematischen Fehler gerade kompensiert werden. Der insgesamt geschliffene Nocken 10 weist damit am Ende des Schleifvorganges gerade die gewünschte Idealkontur auf.

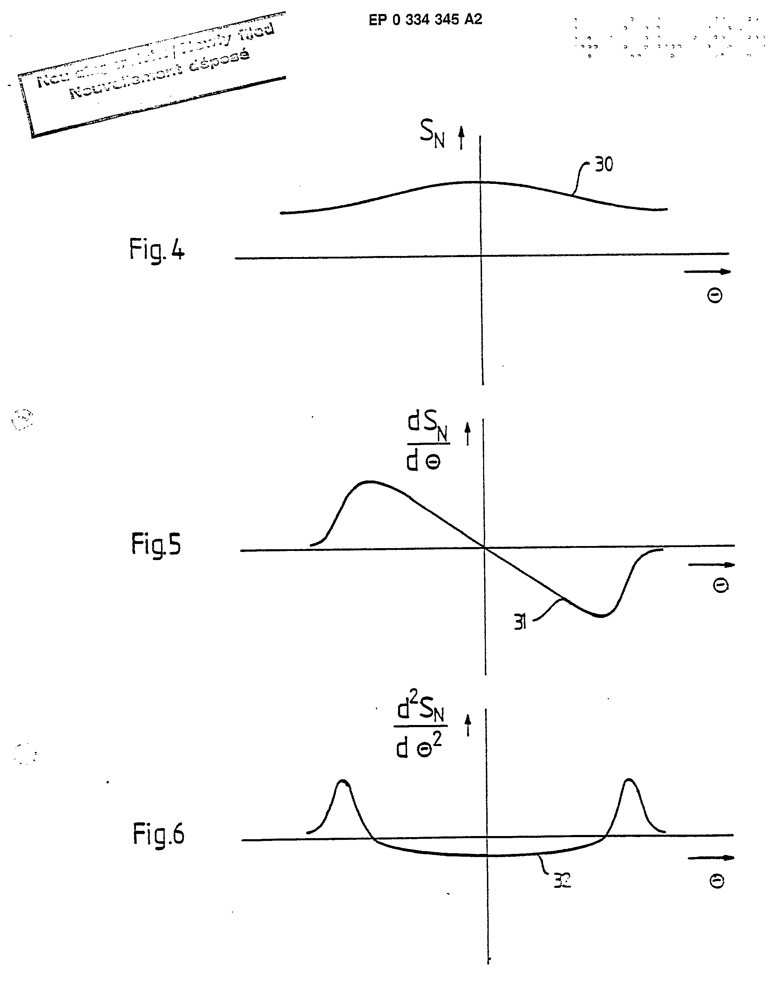

In Fig. 4 ist die sogenannte Erhebungskurve, d.h. die Abhängigkeit des Erhebungswertes $S_N$ vom Erhebungswinkel $\Theta$ mit einem Verlauf 30 dargestellt.

Fig. 5 zeigt demgegenüber die erste Ableitung $d\,S_N\,/\,d\Theta$ des Erhebungswertes $S_N$ über dem Erhebungswinkel $\Theta$ mit einem Verlauf 31.

Fig. 6 zeigt schließlich die zweite Ableitung $d^2\,S_N\,/\,d\Theta^2$ des Erhebungswertes $S_N$ über dem Erhebungswinkel $\Theta$ mit einem Verlauf 32.

Aus diesen typischen Nockenkurven ergeben sich Geschwindigkeits-und Beschleunigungsverläufe, und es ist eine leichte Nockenformanalyse möglich, um kritische Punkte, insbesondere Unstetigkeiten in der Nockenkontur, zu erkennen. Im hier interessierenden Zusammenhang werden die Verläufe 30 bis 32 dazu herangezogen, um die gewünschten Korrekturwerte für die Koordinaten $C_{soll}$ und $X_{soll}$ zu bilden.

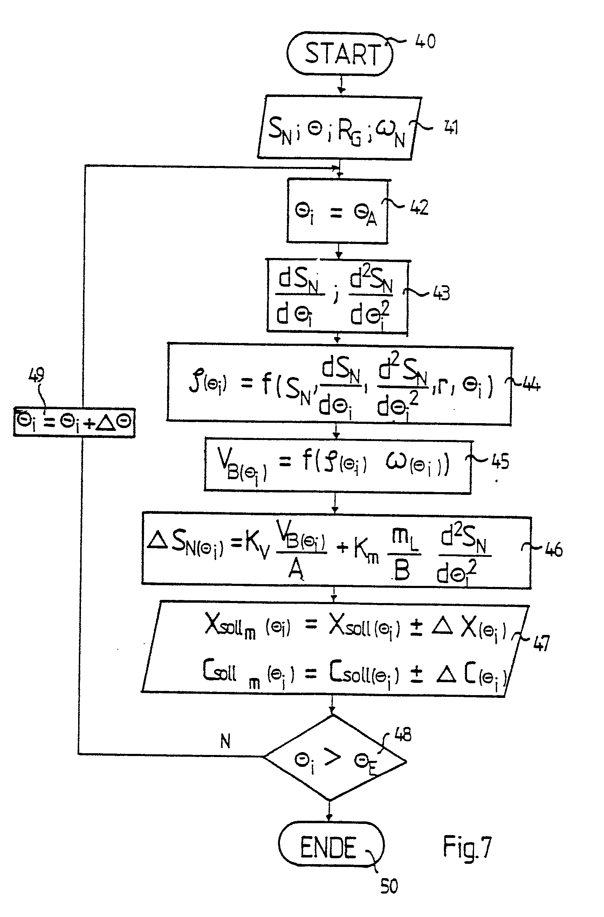

Fig. 7 zeigt hierzu ein Flußdiagramm, das die Arbeitsweise der Modifizierstufe 27 wiedergibt.

In einem ersten Block 40 wird das Korrekturverfahren gestartet, und in einem zweiten Block 41 werden die Eingangsgrößen vorgegeben. Hierzu gehören die Soll-Werte der Nockenkontur, beispielsweise in Gestalt der Erhebungswerte $S_N$, tabelliert über dem Erhebungswinkel $\Theta$. Es ist ferner noch der Radius $R_G$ des Grundkreises angegeben, und die Winkelgeschwindigkeit $\omega_N$ des Nockens.

In einem dritten Block 42 wird nun das Korrekturprogramm dadurch initialisiert, daß als laufender Wert für den Erhebungswinkel $\Theta_i$ ein Anfangswert $\Theta_A$ eingesetzt wird.

In einem vierten Block 43 wird nun für den jeweiligen Erhebungswinkel $\Theta_i$, der beim ersten Durchlauf des Flußdiagramms gemäß Fig. 6 gleich $\Theta_A$ ist, die erste und die zweite Ableitung $d\,S_N\,/\,d\Theta_i$ und $d2\,S_N\,/\,d\Theta_i^2$ gebildet.

In einem fünften Block 44 wird aus dem Absolutbetrag des Erhebungswertes $S_N$, den genannten Ableitungen $d\,S_N\,/\,d\Theta_i$ und $d^2\,S_N\,/\,d\Theta_i^2$, dem jeweiligen Radius $r_i$ des Punktes P und dem jeweiligen Absolutwert des Erhebungswinkels $\Theta_i$ der Krümmungsradius $\rho\,(\Theta_i)$ gebildet.

In einem sechsten Block 45 wird aus dem Krümmungsradius $\rho\,(\Theta_i)$ sowie dem Wert der Winkelgeschwindigkeit $\omega(\Theta_i)$ die Bahngeschwindigkeit $V_B\,(\Theta_i)$ nach den bekannten Gleichungen der Dynamik ermittelt.

In einem siebten Block 46 wird nun schließlich ein Korrekturwert $\Delta\,S_N\,(\Theta_i)$ für den Erhebungswert $S_N$ gebildet, der der folgenden Gleichung genügt:

$$\Delta\,S_N\,(\Theta_i)\ =\ K_v\ \frac{V_B\,(\Theta_i)}{A}\ +\ K_m\ \frac{m_L}{B}\ \frac{d^2\,S_N}{d\Theta_i^2}$$

Dieser Korrekturwert $\Delta\,S_N\,(\Theta_i)$ des Erhebungswertes $S_N$ kann nun durch bekannte Koordinatentransformation in entsprechende Korrekturwerte $\Delta X(\Theta_i)$ und $\Delta C(\Theta_i)$ umgesetzt werden. Es ergibt sich dann für die modifizierten Soll-Werte $X_{soll\ m}\,(\Theta_i)$ und $C_{soll\ m}\,(\Theta_i)$ das folgende Gleichungssystem:

$X_{soll\ m}\,(\Theta_i)\ =\ X_{soll}\,(\Theta_i)\ \pm\ \Delta X(\Theta_i)$

$C_{soll\ m}\,(\Theta_i)\ =\ C_{soll}\,(\Theta_i)\ \pm\ \Delta C(\Theta_i)$

In einem neunten Block 49 wird nun beim Durchlaufen des Flußdiagramms gemäß Fig. 7 geprüft, ob der laufende Wert $\Theta_i$ des Erhebungswinkels $\Theta$ bereits den Endwert $\Theta_E$. normalerweise also den vollen Umfangswinkel von $360°$, durchlaufen hat. Ist dies nicht der Fall, wird in einem zehnten Block 49 der

5

jeweils laufende Wert $\Theta_i$ des Erhebungswinkels $\Theta$ um einen Winkelschritt $\Delta\Theta$ inkrementiert und der inkrementierte Wert dem dritten Block 42 und allen weiteren Blöcken zugrundegelegt. Wenn alle Punkte P der Nockenkontur in dieser Weise abgearbeitet worden sind, ist das Programm im zehnten Block 50 beendet.

Insgesamt wurde somit aus den Eingangskoordinaten $C_{soll}$ und $X_{soll}$, die eine ideale Nockenkontur repräsentieren, ein Satz modifizierter Werte $X_{soll\ m}$ und $C_{soll\ m}$ gebildet, die zur Steuerung der Schleifmaschine gemäß Fig. 3 herangezogen werden.

·Das vorstehend beschriebene Verfahren beruht auf der folgenden Überlegung:

Beim Unrundschleifen, d.h. beispielsweise beim Schleifen von Nocken einer Nockenwelle, unterscheidet man zwischen dem sogenannten Zustellbetrieb und dem sogenannten Bahnbetrieb. Der Bahnbetrieb kennzeichnet die Unrundbewegung in Abhängigkeit von der gewünschten Kontur des Nockens, während der Zustellbetrieb die erforderliche Zustellbewegung der Schleifscheibe kennzeichnet, um vom Rohmaß auf ein Fertigmaß zu schleifen.

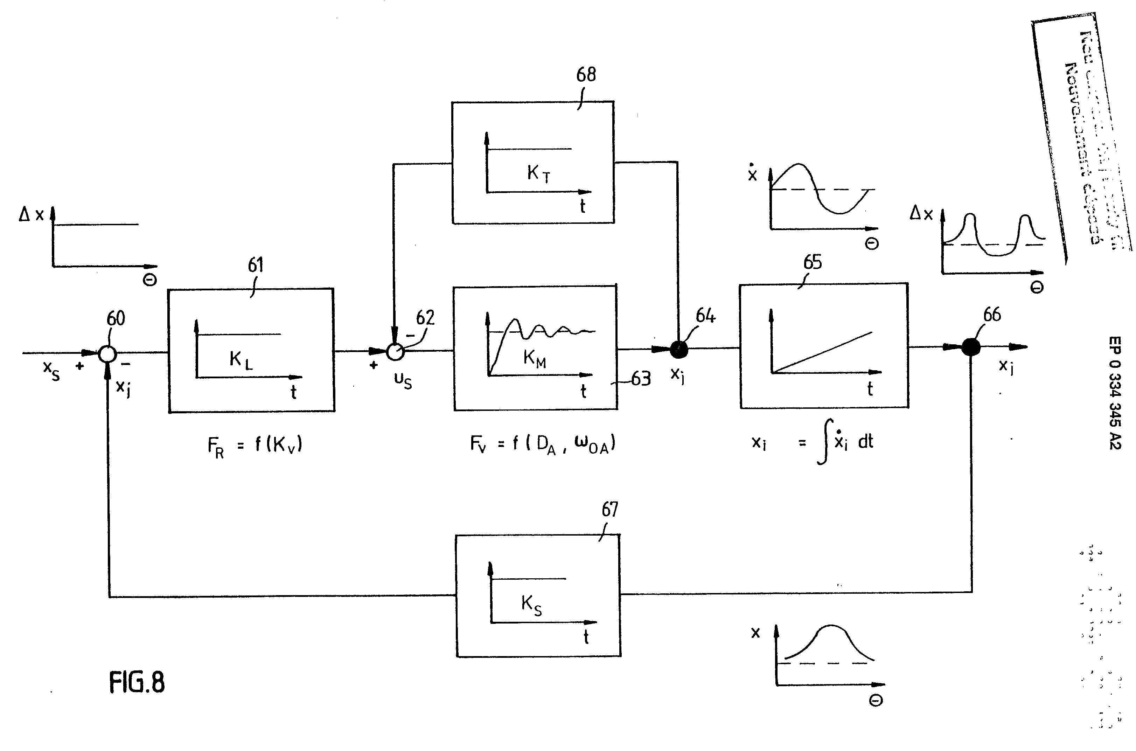

Für den Bahnbetrieb mit einer kontinuierlichen Lageregelung, deren Vorschubantrieb bezüglich des Zeitverhaltens durch ein Verzögerungsglied zweiter Ordnung angenähert werden kann, gilt ein Blockschaltbild als vereinfachter Signalflußplan des Lagereglers, wie es Fig. 8 zeigt.

Das Eingangssignal, nämlich ein Lage-Soll-Wert $X_s$ gelangt auf einen positiven Eingang eines ersten Summenpunkts 60. Dieser bildet den Eingang eines Lagereglers 61, der als Proportionalglied ausgebildet ist. Im Ausgang des Lagereglers 61 ist ein zweiter Summenpunkt 62 angeordnet, auf den der Ausgang des Lagereglers 61 mit einem positiven Eingang geführt ist. Dem zweiten Summenpunkt 62 ist ein Vorschubantrieb 63 nachgeordnet, der als Verzögerungsglied wirkt. In dessen Ausgang befindet sich ein Schaltpunkt 64, der wiederum Eingang eines mechanischen Übertragungselementes 65 ist, das als Integralglied wirkt. Der Ausgang des mechanischen Übertragungselementes 65 beinhaltet wiederum einen Schaltpunkt 66 als Ausgang, der den Lage-Ist-Wert $X_i$ darstellt.

Vom Schaltpunkt 66 am Ausgang des mechanischen Übertragungselementes 65 führt ein Rückkopplungszweig über ein Lagemeßsystem 67 auf einen invertierenden Eingang des ersten Summenpunktes 60.

Außerdem führt vom ersten Schaltpunkt 64 am Ausgang des Vorschubantriebes 63 ein weiterer Rückkopplungszweig über ein Geschwindigkeitsmeßsystem 68 zu einem invertierenden Eingang des zweiten Summenpunktes 62.

In Fig. 8 sind ferner die jeweils auftretenden Größen, nämlich der Lage-Soll-Wert $X_s$, der Lage-Ist-Wert $X_i$, eine Soll-Spannung $U_s$, eine Ist-Geschwindigkeit $\dot{X}_i$, eine Geschwindigkeitsverstärkung $K_v$, ein Dämpfungsgrad $D_A$ des Antriebes 63, eine Kennkreisfrequenz $\omega_{oA}$ des Antriebes 63 sowie eine Soll-Ist-Differenz $\Delta X$ dargestellt.

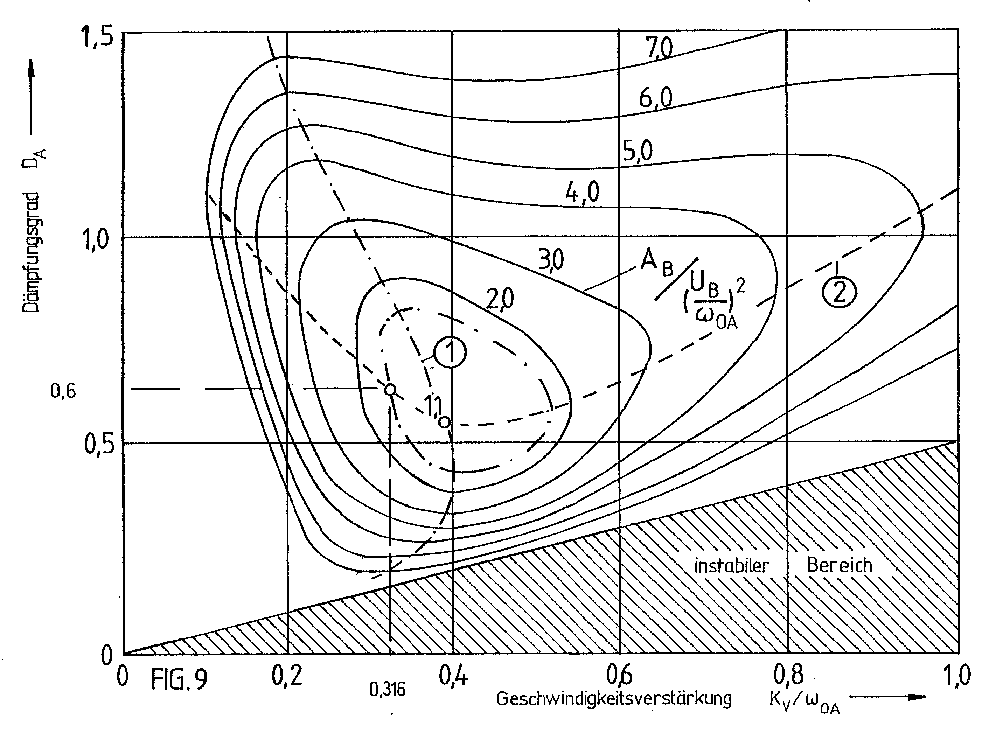

Fig. 9 zeigt hierzu noch ein Diagramm des Dämpfungsgrades $D_A$ über der Geschwindigkeitsverstärkung $K_v$, $\omega_{oA}$, in parametrierter Darstellung. Aus diesem Diagramm der Fig. 9 ist der Zusammenhang zwischen maximaler Bahnabweichung bei einer kontinuierlichen Lageregelung und dem Regelkreisparameter zu entnehmen, wo Linien gleicher Bahnabweichungsflächen $A_B$ bei einer konstanten Bahngeschwindigkeit $U_B$ aufgetragen sind. Das Diagramm der Fig. 9 ist den Lehrbüchern von Stute "Die Lageregelung an Werkzeugmaschinen" sowie Hesselbach "Digitale Lageregelung an numerisch gesteuerten Maschinen" entnommen und dort näher erläutert.

Bei dem Diagramm der Fig. 9 stellt der tiefste Punkte des dort aufgetragenen Reliefs, nämlich der Schnittpunkt der Isoklinen 1 und 2, das absolute Optimum dar. Dieser Punkt liegt in der Ordinate bei $D_A = 0,55$ und in der Abszisse bei $K_v / \omega_{oA} = 0,39$. Übliche Kennwerte für Vorschubantriebe befinden sich in einem Bereich von $\omega_{oA}$ zwischen $100\ s^{-1}$ und $200\ s^{-1}$, bzw. zwischen 0,4 und 0,7 für $D_A$, bei einer Abtastzeit T zwischen 2 ms und 15 ms und einer Eigenfrequenz $f_0 \le 32$ Hz.

Bei der Ermittlung der Übertragungsfunktion der Vorsteuerung durch die Soll-Wert-Modifikation wird davon ausgegangen, daß im Idealfall die Lage-Ist-Größe $X_i$ (t) gleich der Führungsgröße $X_s$ (t) sein soll und daß die Lageregelstrecke bezüglich des Zeitverhaltens durch ein Verzögerungsglied zweiter Ordnung angenähert werden kann.

Für ein Feder-Masse-Dämpfungssystem als Verzögerungsglied zweiter Ordnung gilt bekanntlich:

$$m \cdot \ddot{X}_a + d_F \cdot \dot{X}_a + C_F \cdot (X_a - K_p \cdot X_e) = 0 \qquad (1)$$

oder bei $K_p = 1$:

$$\Delta X = \frac{m}{C_F} \cdot \ddot{X}_a + \frac{d_F}{C_F} \cdot \dot{X}_a \qquad (2)$$

Das Minimum für die Bahnabweichung wird durch die partielle Ableitung der Funktion nach der Zeit

ermittelt:

$$\frac{\partial \Delta X}{\partial t} = \frac{\partial}{\partial t}\left(\frac{m}{C_F} \cdot \ddot{X}_a + \frac{d_F}{C_F} \cdot \dot{X}_a\right) \qquad (3)$$

für

$$\lim_{X_a = X_e} \Delta X = \frac{\partial \Delta X}{\partial t} = 0 \qquad (4)$$

als Führungsgrößenbedingung.

Hieraus folgt:

$$\Delta \dot{X} - \left(\frac{d_F}{C_F} \cdot \ddot{X}_a + \frac{n}{C_F} \cdot \ddot{X}_a\right) = 0 \qquad (5)$$

oder

$$\frac{\Delta \dot{X}}{KY} - \left(\frac{2 \cdot D_A}{\omega_{oA} \cdot KV} \cdot \ddot{X}_a + \frac{1}{\omega_{oA}^2 \cdot KV} \cdot \ddot{X}_a\right) = 0 \qquad (6)$$

die der Gleichung

$$\Delta S_N (\Theta_1) = K_v \cdot \frac{1}{KY} \cdot V_B (\Theta_1) + K_m \cdot \frac{m_L}{C} \cdot \frac{d^2 S_{N1}}{d\Theta_1^2} \qquad (7)$$

entspricht.

Die vorstehend aufgeschriebene Gleichung (7) für den Korrekturwert zur Lage-Soll-Vorsteuerung beinhaltet als ersten Faktor die Soll-Wert-Korrektur nach der Soll-Geschwindigkeit:

$$K_y \cdot \frac{1}{KV} \cdot Y_B (\Theta_1) = (\dot{X}_1 - \dot{X}_{1-1}) \cdot \frac{F}{60} \cdot \frac{1}{KY} \qquad (8)$$

und als zweiten Faktor die Soll-Wert-Korrektur nach der Soll-Beschleunigung

$$K_m \cdot \frac{m_L}{C} \cdot \frac{d^2 S_{N1}}{d\Theta_1^2} = (\dot{X}_1 - 2 \cdot \dot{X}_{1-1} + \dot{X}_{1-2})\left(\frac{F}{60}\right)^2 \cdot \frac{2 \cdot D_A}{\omega_{oA} \cdot KV} \qquad (9)$$

bei einer definierten Werkstückwinkelgeschwindigkeit F der führenden numerisch gesteuerten Achse.

Es wird bei der Ermittlung des Korrekturwertes zur Lage-Soll-Vorsteuerung auch die Beschleunigungsveränderung des ersten Grades berücksichtigt, und zwar durch die Gleichung:

$$(\dot{X}_i - 3 \cdot \dot{X}_{i-1} + 3 \cdot \dot{X}_{i-2} - \dot{X}_{i-3}) \cdot \left(\frac{F}{60}\right)^3 \cdot \frac{1}{\omega_{oA}^2 \cdot KV} \qquad (10)$$

$$F\left[\Delta S_N (\Theta_i)\right] = q = q'(\Theta_i) - \left[q''(\Theta_i) - q'''(\Theta_i)\right]$$

Der Korrekturwert $\Delta S_N (\Theta_i)$ als inkrementale Lageführungsgrößenvorsteuerung ermöglicht eine Kompensation des Schleppabstandes der Zustellachse durch Führungsglättung, die auf einer Beschränkung der ersten, zweiten und gar dritten Ableitung der Wege-Zeit-Funktion des Lage-Soll-Wertes beruht.

Aufgrund dieser Darstellungsweise ist es möglich, dem Interpolator anstelle der ursprünglichen Lageführungsgröße eine Ersatzführungsgröße $X_{SollM} (\Theta_i)$ als Eingangsgröße zuzuordnen, die das Verhalten des Proportional-, Verzögerungs-und des Integralgliedes berücksichtigt.

Sie setzt sich zusammen aus der Lageführungsgröße $X_{Soll} (\Theta_i)$ und der Zusatzlageführungsgröße $\Delta K_x (\Theta_i)$. Die Ersatzlageführungsgröße kann somit angegeben werden als:

$X_{Soll} (\Theta_i) = X_{Soll} (\Theta_i) \pm \Delta K_x (\Theta_i)$     (11)

mit     .

$\Delta K_x (\Theta_i) = f[\Delta S_N (\Theta_i)]$,     (12)

wo die Regelparameter $\omega_{oA}$ und $D_A$ nicht bestimmt sind.

Wenn die Geschwindigkeitsverstärkung $K_V$ beispielsweise gleich 40 s$^{-1}$ ist und eine Abtastzeit T von 2,5 ms vorliegt, kann die Kennkreisfrequenz wie folgt berechnet werden:

$$\omega_{oA} = \sqrt{\frac{KV}{T}} = \sqrt{\frac{40}{0,0025}} = 126,49 \ s^{-1} \qquad (13)$$

Für einen Quotienten $KV/\omega_{oA} = 0{,}316$ ergibt sich nach Fig. 9 für ein Verhältnis $A_B/(U_B/\omega_{oA})^2 = 1{,}2$ eine Dämpfung des Antriebs $D_A = 0{,}6$.

Durch die Bestimmung dieser Regelparameter ist die Konfiguration der Regelstrecke angegeben. Auf die weiter oben anhand der Fig. 7 erläuterte Weise können nun die Korrekturwerte zur Soll-Wert-Modifikation ermittelt werden.

## Ansprüche

Verfahren zum Schleifen von Nocken (10) einer drehbar eingespannten Nockenwelle mittels einer numerisch gesteuerten Schleifmaschine, bei dem die Nockenwelle mittels eines steuerbaren ersten Antriebes (20) in definierten Winkelschritten ($\phi$) und mit vorgegebener Winkelgeschwindigkeit ($\omega_N$) um ihre Längsachse (12) drehbar und eine Schleifscheibe (11) mit einer zur Längsachse (12) parallelen Mantellinie mittels eines steuerbaren zweiten Antriebes (21) in definierten Schritten ($H_s (\phi)$) längs einer zur Längsachse (12) rechtwinkelig verlaufenden Achse (X) zustellbar ist, wobei eine zu erzeugende Soll-Kontur der Nocken (10) punktweise in Form einer Tabelle vorgegeben wird, die Soll-Koordinaten ($X_{soll}$, $C_{soll}$) der Punkte enthält, deren Werte unmittelbar als Steuergrößen für die Antriebe (20, 21) dienen können und die Werte der Koordinaten ($X_{soll}$, $C_{soll}$) in Abhängigkeit von Prozeßparametern der Schleifmaschine modifizierbar ($X_{soll\ m}$, $C_{soll\ m}$) sind, gekennzeichnet durch die Verfahrensschritte:
- Bestimmen des Erhebungswertes ($S_N$) von Punkten (P) der Soll-Kontur in Abhängigkeit vom Erhebungswinkel ($\Theta$);
- Bilden der ersten und der zweiten Ableitung ($d S_N / d\Theta$, $d^2 S_N / d\Theta^2$) des Erhebungswertes ($S_N$) nach dem Erhebungswinkel ($\Theta$);
- Bestimmen der Bahngeschwindigkeit ($V_B$) der Punkte (P);
- Bestimmen eines Korrekturwertes ($\Delta S_N$) des Erhebungswertes ($S_N$) der Punkte (P) nach der Beziehung:

$$\Delta S_N (\Theta_i) = K_v \frac{V_B (\Theta_i)}{A} + K_m \frac{m_L}{B} \frac{d^2 S_N}{d\Theta_i^2}$$

wobei $K_v$ und $K_m$ Konstanten, A die Geschwindigkeitsverstärkung eines Reglers (23) des Steuergerätes (22) und $m_L$ die Lastmassen sowie B die Steifigkeit in dem jeweiligen Punkt (P) ist;

- Umwandeln des Korrekturwertes ( $S_N$) des Erhebungswertes ($S_N$) in Koordinaten-Korrekturwerte ($\Delta X(\Theta_i)$ ; $\Delta C(\Theta_i)$);
- Modifizieren der Soll-Koordinaten ($X_{soll}$, $C_{soll}$) in modifizierte Koordinaten ($X_{soll\ m}$, $C_{soll\ m}$) nach den Beziehungen:

$X_{soll\ m} (\Theta_i) = X_{soll}(\Theta_i) \pm \Delta X(\Theta_i)$

$C_{soll\ m} (\Theta_i) = C_{soll} (\Theta_i) \pm \Delta C(\Theta_i)$

- Schleifen der Nocken (10) unter Einstellung der Antriebe (20, 21) mit den modifizierten Koordinaten ($X_{soll\ m}$, $C_{soll\ m}$).

Fig.2

Fig.1

2001P120EP

EP 0 334 345 A2

Fig. 3

$S_N$

30

Fig. 4

$\Theta$

$\dfrac{dS_N}{d\Theta}$

Fig. 5

31

$\Theta$

$\dfrac{d^2S_N}{d\Theta^2}$

Fig. 6

32

$\Theta$

2001P120EP

$$\text{START} \quad 40$$

$$S_N ; \Theta ; R_G ; \omega_N \quad 41$$

$$\Theta_i = \Theta_A \quad 42$$

$$\frac{dS_N}{d\Theta_i} ; \frac{d^2S_N}{d\Theta_i^2} \quad 43$$

$$\mathcal{f}(\Theta_i) = f\left(S_N, \frac{dS_N}{d\Theta_i}, \frac{d^2S_N}{d\Theta_i^2}, r, \Theta_i\right) \quad 44$$

$$V_{B(\Theta_i)} = f\left(\mathcal{f}_{(\Theta_i)} \; \omega_{(\Theta_i)}\right) \quad 45$$

$$\Delta S_{N(\Theta_i)} = K_V \frac{V_{B(\Theta_i)}}{A} + K_m \frac{m_L}{B} \frac{d^2S_N}{d\Theta_i^2} \quad 46$$

$$X_{soll_m}(\Theta_i) = X_{soll(\Theta_i)} \pm \Delta X_{(\Theta_i)}$$

$$C_{soll_m}(\Theta_i) = C_{soll(\Theta_i)} \pm \Delta C_{(\Theta_i)} \quad 47$$

$$\Theta_i > \Theta_E \quad 48 \qquad N$$

$$\Theta_i = \Theta_i + \Delta\Theta \quad 49$$

$$\text{ENDE} \quad 50$$

Fig.7

FIG.8

$x_i = \int \dot{x}_i \, dt$

$F_V = f(D_A, \omega_{OA})$

$F_R = f(K_V)$

FIG. 9